# EUROPEAN PATENT APPLICATION

(11) **EP 1 688 903 A1**
(43) Date of publication of application: **09.08.2006**
(21) Application number: 04792249.7
(22) Date of filing: 05.10.2004
(51) Int. Cl.: G08G 1/09

(54) **CENTER APPARATUS, TERMINAL APPARATUS, AND DRIVING SUPPORT SYSTEM USING THE SAME**

(30) Priority: 08.10.2003 JP 2003349267; 15.09.2004 JP 2004267951
(71) Applicant: MATSUSHITA ELECTRIC INDUSTRIAL CO., LTD., Kadoma-shi, Osaka 571-8501 (JP)
(72) Inventor: MIYAWAKI, Osamu, Chuo-ku,Osaka-shi,Osaka 540-6319 (JP); UNO, Yoshinobu, Chuo-ku,Osaka-shi Osaka 540-6319 (JP)
(74) Representative: Balsters, Robert
(86) International application number: PCT/JP2004/014999
(87) International publication number: WO 2005/036496

(57) **Abstract**

A transmitting/receiving unit (21) that receives vehicle information including type and speed of a vehicle and position information about present position of the vehicle sent from a terminal device (10) carried on the vehicle, a vehicle control information generating unit (23) that generates vehicle control information for controlling vehicles statistically formed for each type of vehicle on the basis of the vehicle information and the position information, a storage unit (22) that stores the vehicle control information, a control information detecting unit (24) that searches the storage unit (22) for vehicle control information corresponding to the position information of the vehicle received from the terminal device (10), and a transmitting/receiving unit (21) that transmits the vehicle control information found as a result of the search by the control information detecting unit (24) to the terminal device (10), are provided. On the basis of the position information sent from the terminal device (10), the vehicle control information with respect to the traveling direction of the vehicle is sent to the terminal device (10) from the storage unit (22) and the traveling of the vehicle is thus controlled.

## Description

### Technical Field

This invention relates to a center device, a terminal device and a driving support system using the same that realize driving support of a vehicle on the basis of vehicle control information in the traveling direction of the vehicle.

### Background Art

Conventionally, as a driving support system, for example, a system disclosed in JP-A-2002-197587 is known, in which a center device acquires, from road-side devices provided at an entrance toll gate and an exit toll gate of a toll road, information of vehicles that pass by the road-side devices, then monastically manages the information, and transmits driving support information such as speed limit information properly set by a road manager on the basis of information such as the average passing time of the preceding vehicles, weather and traffic congestion, to vehicle that pass by the road-side device provided at the entrance toll gate from the road-side device provided at the entrance toll gate.

With this driving support system, necessary information can be provided to vehicles that pass through a predetermined section of a toll road or the like in consideration of changes of the driving environment in that section. Moreover, the existing Electronic Toll Collection System (ETC) can be utilized.

However, in the conventional driving support system as described in JP-A-2002-197587, the center device simply acquires, from road-side devices installed at an entrance toll gate and an exit toll gate of a toll road, information of vehicles that pass by the road-side devices, and monistically manages the information. The system can be applied only to a road such as a toll road on which entrance and exit are provided.

Also, even if the road to which such a conventional driving support system is applied is a toll road, since the driving support system only acquires information from vehicles that pass by the road-side devices provided at the entrance toll gate and the exit toll gate, it cannot acquire the information of vehicles that are passing between the entrance toll gate and the exit toll gate. Therefore, driving support based on a wide range of information cannot be performed.

Moreover, in the conventional driving support system as described above, when driving support information reflecting the road status that is immediately before is to be provided to a vehicle, the center device collects a wide range of road status information in a batched manner, generates driving support information based on the road status that is immediately before and provides the information to the vehicle. Therefore, it takes long time for the center device to provide the driving support information to the vehicle after collecting the vehicle information, and there is a problem that it is difficult to satisfactorily reflect the road status that is immediately before on the driving support information.

### Disclosure of the Invention

It is an object of this invention to provide a center device, a terminal device and a driving support system using the same that are satisfactorily applicable not only to a toll road but also to a general road and that enable more elaborate driving support reflecting the road status that is immediately before.

A center device according to this invention has: a receiving unit that receives vehicle information including type and speed of a vehicle and position information about present position of the vehicle, sent from a terminal device carried on the vehicle; a vehicle control information generating unit that generates vehicle control information for controlling vehicles statistically formed for each type of vehicle on the basis of the vehicle information and the position information received by the receiving unit; a storage unit that stores the vehicle control information generated by the vehicle control information generating unit; a control information detecting unit that searches the storage unit for vehicle control information corresponding to the position information of the vehicle received from the terminal device; and a transmitting unit that transmits the vehicle control information detected by the control information detecting unit to the terminal device.

With this construction, the center device according to this invention prepares vehicle control information statically formed for each type of vehicle, transmits the information to the terminal device without using any particular road-side device, and thus can control the vehicle. The center device can freely support safer driving of each vehicle not only on an expressway but also on a general road.

Also, the center device according to this invention has a construction in which the vehicle control information generating unit calculates the vehicle control information on the basis of averaged information formed by averaging the vehicle information, and in which the storage unit stores the vehicle control information in association with the position information for which the vehicle information is sent. Therefore, the vehicle control information based on the averaged vehicle information of each vehicle can be provided in association with the position information.

Also, the center device according to this invention has a construction in which the control information detecting unit searches for legal regulation information with respect to the position information corresponding to the vehicle control information that is found by search, and corrects the vehicle control information on the basis of the result of comparison between the vehicle control information of each position information and the legal regulation information. Therefore, not only the vehicle control information based on the averaged vehicle information of each vehicle but also the vehicle control information conforming to the legal regulations of the road in question can be provided.

Also, the center device according to this invention has a construction in which the control information detecting unit searches for traffic information related to traffic status with respect to the position information corresponding to the vehicle control information that is found by search, and corrects the vehicle control information on the basis of the result of comparison between the vehicle control information of each position information and the traffic information. Therefore, not only the vehicle control information based on the averaged vehicle information of each vehicle but also the vehicle control information based on the traffic status of the road in question can be provided.

Also, the center device according to this invention has a construction in which the control information detecting unit searches for vehicle control information within a predetermined zone from the present position of the vehicle in response to a request from the terminal device. Therefore, the vehicle control information within the predetermined zone can be acquired in advance and the vehicle can be controlled in accordance with the information.

Also, the center device according to this invention has a construction in which the predetermined zone is a sector-like zone directed toward the traveling direction from the present position. Therefore, the vehicle control information in the predetermined sector-like zone is provided and slight changes in the traveling direction of the vehicle can be satisfactorily coped with.

Also, the center device according to this invention has a construction in which the predetermined zone is a rectangular zone directed toward the traveling direction from the present position. Therefore, the vehicle control information in the predetermined rectangular zone is provided and slight changes in the traveling direction of the vehicle can be satisfactorily coped with.

Also, the center device according to this invention has a construction in which the predetermined zone is a zone of the traveling route of the vehicle received from the terminal device. Therefore, the vehicle control information on the preset traveling route such as a route from a place of departure to a destination of the vehicle is provided and driving support to the destination can be performed.

Also, the center device according to this invention has a construction in which the predetermined zone is a zone with a predetermined width centering on the traveling route of the vehicle received from the terminal device. Therefore, the vehicle control information in the zone with the predetermined width centering on the traveling route of the vehicle can be detected. The vehicle information not only on the preset traveling route but also in the zone with the predetermined width including that route is provided and slight changes in the traveling direction of the vehicle can be satisfactorily coped with.

Also, the center device according to this invention has a construction in which the vehicle control information controls at least one of the accelerator and the brake of the vehicle. Therefore, driving support can be performed by controlling the accelerator or the brake of the vehicle that carries the terminal device on the basis of the vehicle control information.

Moreover, a terminal device according to this invention is a terminal device that is carried on a vehicle and that acquires vehicle control information for controlling the vehicle, sent from a center device, and controls the vehicle. The terminal device has: a position detecting unit that detects position information related to the present position of the vehicle; a vehicle information detecting unit that detects vehicle information including type and speed of the vehicle; a transmitting unit that transmits the position information detected by the position detecting unit and the vehicle information detected by the vehicle information detecting unit to the center device; a receiving unit that receives the vehicle control information sent from the center device; and a vehicle control unit that controls the vehicle on the basis of the vehicle control information received by the receiving unit.

With this construction, since the vehicle control information prepared at the center device is received from the center device and the vehicle is controlled, safe driving support can be performed not only on an expressway but also on a general road.

Also, the terminal device according to this invention has a construction in which the vehicle control information corresponds to the position information detected by the position detecting unit. Therefore, the vehicle control information corresponding to the position information detected by the position detecting unit is provided from the center device.

Also, the terminal device according to this invention has a construction in which the vehicle control information is statistically formed for each type of vehicle on the basis of the vehicle information and the position information sent by the transmitting unit. Therefore, the vehicle control information that is statistically formed for each type of vehicle on the basis of the vehicle information and the position information in the center device can be provided.

Also, the terminal device according to this invention has a storage unit that stores the vehicle control information received by the receiving unit and has a construction in which the vehicle control unit extracts the vehicle control information from the storage unit on the basis of the position information of the vehicle. Therefore, the storage unit stores the vehicle control information sent from the center device, and the vehicle control unit extracts the vehicle control information from the storage unit on the basis of the position information of the vehicle.

Also, the terminal device according to this invention has a construction in which the transmitting unit transmits an acquisition request for vehicle control information in a rectangular or sector-like zone directed toward the traveling direction from the present position of the vehicle, to the center device, and in which the receiving unit receives the vehicle control information in the rectangular or sector-like zone based on the acquisition request, from the center device. Therefore, the vehicle control information in the rectangular or sector-like zone directed toward the traveling direction from the present position of the vehicle is provided and slight changes in the traveling direction of the vehicle can be satisfactorily coped with.

Also, the terminal device according to this invention has a construction in which the transmitting unit transmits an acquisition request for vehicle control information on a traveling route of the vehicle, to the center device, and in which the receiving unit receives the vehicle control information on the traveling route based on the acquisition request, from the center device. Therefore, the vehicle control information on the traveling route of the vehicle is provided and driving support to the destination can be performed.

Also, the terminal device according to this invention has a construction in which the transmitting unit transmits an acquisition request for vehicle control information in a predetermined zone centering on the traveling route of the vehicle, to the center device, and in which the receiving unit receivers the vehicle control information based on the acquisition request, from the center device. Therefore, the vehicle control information in the predetermined zone centering on the traveling direction of the vehicle is provided and slight changes in the traveling direction of the vehicle can be satisfactorily coped with.

Also, the terminal device according to this invention has a construction in which the vehicle control unit controls at least one of the accelerator and the brake of the vehicle. Therefore, driving support can be performed by controlling the accelerator or the brake of the vehicle on the basis of the received vehicle control information.

Moreover, a driving support system according to this invention is a driving support system that transmits vehicle control information for controlling a vehicle to a terminal device carried on the vehicle from a center device. The terminal device has: a position detecting unit that detects position information related to the present position of the vehicle; a vehicle information detecting unit that detects vehicle information including type and speed of the vehicle; a terminal-side transmitting unit that transmits the position information detected by the position detecting unit and the vehicle information detected by the vehicle information detecting unit to the center device; a terminal-side receiving unit that receives the vehicle control information sent from the center device; and a vehicle control unit that controls the vehicle on the basis of the vehicle control information received by the terminal-side receiving unit. The center device has: a center-side receiving unit that receives the vehicle information and the position information; a vehicle control information generating unit that generates vehicle control information statistically formed for each type of vehicle on the basis of the vehicle information and the position information received by the center-side receiving unit; a storage unit that stores the vehicle control information generated by the vehicle control information generating unit; a control information detecting unit that searches the storage unit for vehicle control information corresponding to the position information of the vehicle received from the terminal device; and a center-side transmitting unit that transmits the vehicle control information detected by the control information detecting unit to the terminal device.

With this construction, the center device prepares the vehicle control information statistically formed for each type of vehicle on the basis of the position information and the vehicle information sent from the terminal device, transmits the information to the terminal device without using any particular road-side device, and thus can control the vehicle. There is an advantage that safer driving of each vehicle can be freely supported not only on an expressway but also on a general road.

As described above, the center device according to this invention has: a receiving unit that receives vehicle information including type and speed of a vehicle and position information about present position of the vehicle, sent from a terminal device carried on the vehicle; a vehicle control information generating unit that generates vehicle control information for controlling vehicles statistically formed for each type of vehicle on the basis of the vehicle information and the position information received by the receiving unit; a storage unit that stores the vehicle control information generated by the vehicle control information generating unit; a control information detecting unit that searches the storage unit for vehicle control information corresponding to the position information of the vehicle received from the terminal device; and a transmitting unit that transmits the vehicle control information detected by the control information detecting unit to the terminal device. It has an advantage that safer driving of each vehicle can be freely supported not only on an expressway but also on a general road.

### Brief Description of the Drawings

Fig. 1 is a schematic block diagram of a driving support system according to one embodiment of this invention.
Fig. 2 is a first flowchart for explaining an operation of the driving support system according to the one embodiment of this invention.
Fig. 3 is a second flowchart for explaining an operation of the driving support system according to the one embodiment of this invention.
Fig. 4 is a third flowchart for explaining an operation of the driving support system according to the one embodiment of this invention.
Fig. 5 is a diagram for explaining a driving support method based on vehicle control information in the driving support system according to the one embodiment of this invention.
Fig. 6 is a first conceptional view for explaining a search zone for vehicle control information in the driving support system according to the one embodiment of this invention.
Fig. 7 is a second conceptional view for explaining a search zone for vehicle control information in the driving support system according to the one embodiment of this invention.
Fig. 8 is a third conceptional view for explaining a search zone for vehicle control information in the driving support system according to the one embodiment of this invention.

### Best Mode for Carrying Out the Invention

Hereinafter, an embodiment of this invention will be described with reference to the drawings.

### (Embodiment)

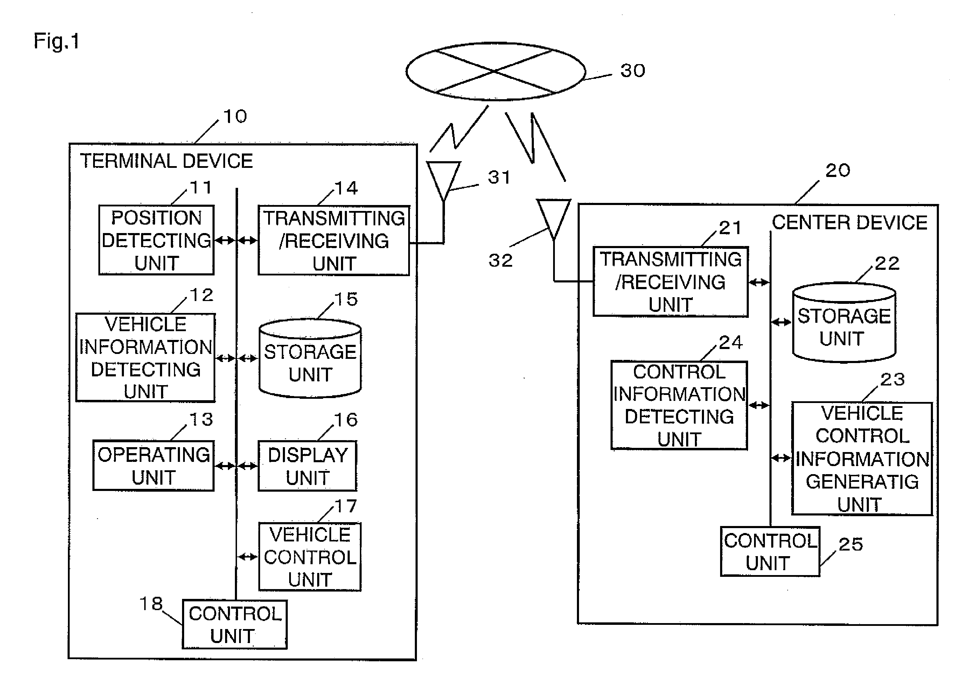

Fig. 1 is schematic block diagram of a driving support system according to one embodiment of this invention.

The driving support system according to the one embodiment of this invention is constituted by a terminal device 10 carried on a vehicle, and a center device 20 that can perform wireless communication with this terminal device 10, as shown in Fig. 1.

The terminal device 10 carried on the vehicle has a position detecting unit 11 that calculates the present position of the vehicle from outputs of a GPS receiver, gyro, vehicle speed sensor and the like, a vehicle information detecting unit 12 that detects vehicle information such as the type and speed of the vehicle, the opening of the accelerator, the status of use of the brake and the like, and an operating unit 13 that inputs various commands and information.

Moreover, the terminal device 10 has a transmitting/receiving unit 14 that performs communication with the center device 20, a storage unit 15 that stores vehicle control information received from the center device 20, the position information and the vehicle information such as the type of vehicle, a display unit 16 that displays various information, a vehicle control unit 17 that controls the accelerator, brake and the like of the vehicle, and a control unit 18 that controls each unit in the terminal device 10.

The center device 20 has a transmitting/receiving unit 21 that can communicate with the terminal device 10 via a wireless telephone channel, the Internet or another communication channel 30, and a storage unit 22 that stores the position information and vehicle information sent from the terminal device 10, vehicle control information generated on the basis of the position information and vehicle information, and legal regulation information such as the Road Traffic Act.

Moreover, the center device 20 has a vehicle control information generating unit 23 that generates vehicle control information by statistically processing, averaging or standardizing all the information including the position information and vehicle information stored in the storage unit 22, a control information detecting unit 24 that searches the storage unit 22 for vehicle control information in an area corresponding to the route from the place of departure to the destination of the vehicle or the traveling direction of the vehicle, and a control unit 25 that controls each unit in the center device 20.

In the storage unit 22, the vehicle control information generated by the vehicle control information generating unit 23 is stored in association with the position information for each type of vehicle.

31 and 32 represent antennas that are connected to the transmitting/receiving unit 14 of the terminal device 10 and the transmitting/receiving unit 21 of the center device 20, respectively, for transmitting and receiving information via the communication channel 30.

The control information detecting unit 24 acquires the vehicle control information and the information related to the legal regulations of the road including the speed limit, vehicle height limit, weight limit, vehicle width limit and the like at the point corresponding to the vehicle control information, and compares the information. If the vehicle control information is violating the legal regulations, the control information detecting unit 24 corrects vehicle control information to conform to the legal regulations.

Moreover, the control information detecting unit 24 acquires the vehicle control information from the storage unit 22, compares the vehicle control information with the traffic status and traffic regulation information of the road that are dynamically changing, at the point corresponding to the vehicle control information, and corrects the vehicle control information in accordance with the traffic status and traffic regulation information of the road.

The dynamically changing traffic status and traffic regulation information of the road can be easily acquired by utilizing the exiting road traffic information provision service.

Storing the type of vehicle into the storage unit 15 of the terminal device 10 can be realized by employing a technique of providing a switch to select the type of vehicle on the terminal device 10 carried on the vehicle, then judging the setting state indicating which vehicle is selected by this switch, when starting up the terminal device 10, and storing the result of the judgment into the storage unit 15 as the type of vehicle, or a technique of storing the type of vehicle by using a device to write the type of vehicle into the storage unit 15 before loading the terminal device 10 on the vehicle.

In this embodiment, the vehicle control information is prepared by the vehicle control information generating unit 23 and stored in the storage unit 22. However, it is also possible to provide the storage unit 22 with the function of generating and storing the vehicle control information.

Next, the operation of the driving support system according to this embodiment will be described.

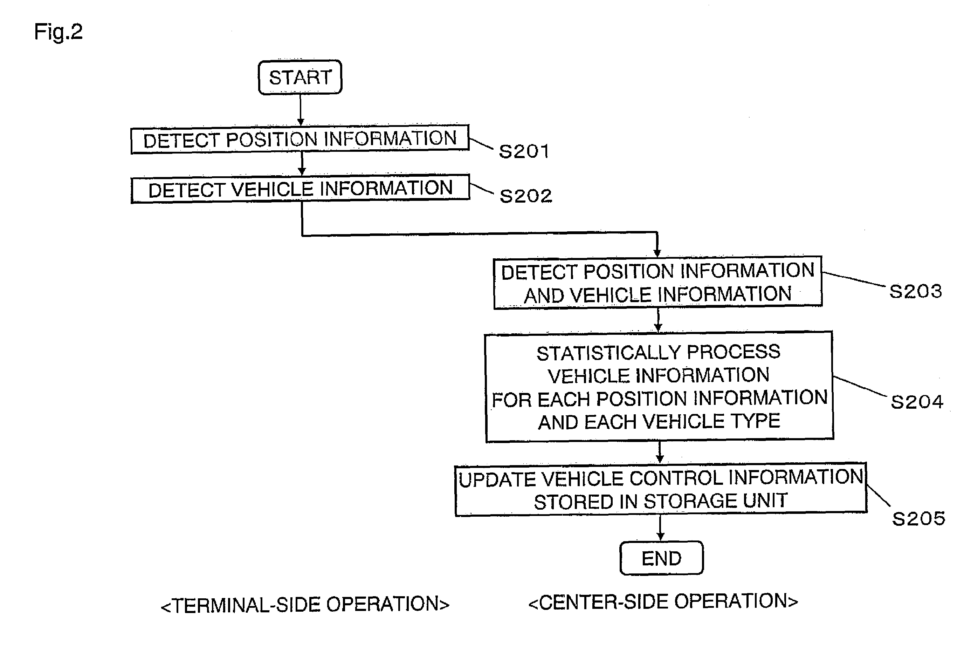

Fig. 2, Fig. 3 and Fig. 4 are flowcharts for explaining operations of the driving support system according to this embodiment.

First, an operation in which the center device 20 acquires the vehicle information detected at the terminal device 10 and updates the vehicle control information, will be described with reference to Fig. 2. This operation is constantly carried out during the traveling of the vehicle.

Initially, in the terminal device 10 carried on the vehicle, the position detecting unit 11 detects the present position of the vehicle (step 201). Then, the vehicle information detecting unit 12 detects vehicle information such as the type of the vehicle, the speed, the opening of the accelerator, and the status of use of the brake, and the transmitting/receiving unit 14 transmits these position information and vehicle information to the center device 20 via the antenna 31 (step 202).

In the center device 20, the transmitting/receiving unit 21 receives the position information and vehicle information sent from the terminal device 10 via the antenna 32 (step 203), and supplies the information to the control unit 25.

The control unit 25 controls the vehicle control information generating unit 23, causes the vehicle control information generating unit 23 to perform averaging or the like of the vehicle information with respect to all the position information for each type of vehicle, using the received position information and vehicle information, and thus causes the vehicle control information generating unit 23 to calculate statistically formed or standardized vehicle control information (step 204).

Moreover, the control unit 25 updates the corresponding vehicle control information for each type of vehicle stored in the storage unit 22 (step 205).

In this manner, each terminal device 10 constantly transmits the vehicle information at the present position of the vehicle to the center device 20. The center device 20 calculates and updates the statistically formed or standardized vehicle control information of each point by using the position information and vehicle information sent from many vehicles, and stores the vehicle control information into the storage unit 22.

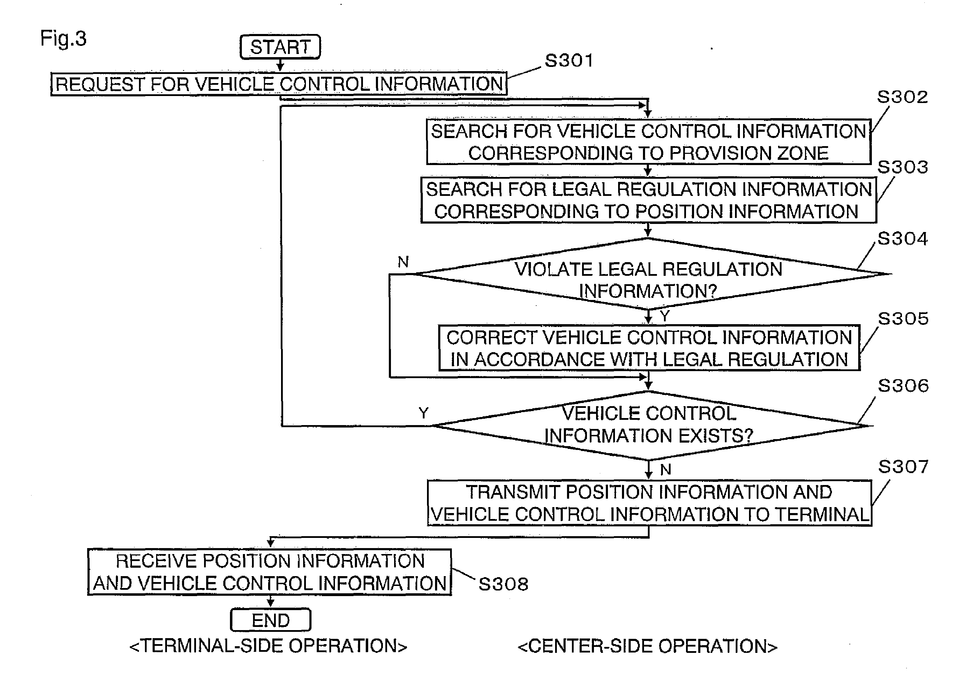

Next, a procedure in which the terminal device 20 requests the center device 20 to transmit the vehicle control information for performing driving support and in which the center device 20 detects the vehicle control information corresponding to the driving support zone of the terminal device 10 and provides the vehicle control information to the terminal device 10, will be described with reference to Fig. 3.

In the terminal device 10, as the operator of the vehicle inputs a destination by using the operating unit 13 and performs a predetermined operation for route search, acquisition of vehicle control information and the like, this is inputted to the control unit 18. Then, under the control of the control unit 18, the position information including the present position detected by the position detecting unit 11 and one of the traveling direction and the route from the place of departure to the destination is sent to the center device 20 together with the type of vehicle detected by the vehicle detecting unit 12. By transmitting this position information and the type of vehicle, the terminal device 10 requests the center device 20 to provide the vehicle control information with respect to the traveling direction (step 301).

In the center device 20, the transmitting/receiving unit 21 receives the position information including the present position and one of the traveling direction and the route, and the type of vehicle, sent from the terminal device 10. Then, the control information detecting unit 24 calculates the provision zone of the vehicle control information from the received present position and the one of the traveling direction and the route, and searches the storage unit 22 for the vehicle control information corresponding to the provision zone and the type of vehicle (step 302).

Moreover, the control information detecting unit 24 searches the storage unit 22 for the legal regulation information such as the Road Traffic Act with respect to the road corresponding to the position information (step 303), then compares the statistically formed or standardized vehicle control information with the legal regulation information extracted from the storage unit 22, and judges whether the statistically formed or standardized vehicle control information is the vehicle control information conforming to the law (step 304).

If the result of the judgment by the control information detecting unit 24 shows that the vehicle control information is violating the law (Y at step 304), the vehicle control information is corrected in accordance with the legal regulation information (step 305).

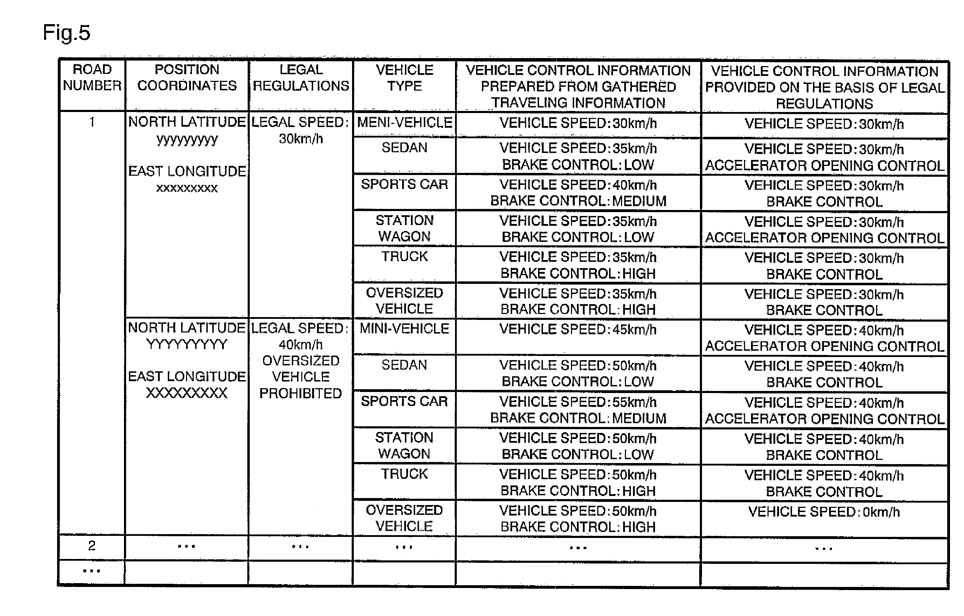

Fig. 5 is a diagram showing exemplary legal regulations and vehicle control information for each type of vehicle at a certain position on a certain road, and showing an operation in this embodiment.

For example, as shown in Fig. 5, in the case where the vehicle speed of the vehicle control information with respect to a vehicle of vehicle type of sedan traveling on a road of road number 1 is 35 km/h, if the speed limit based on the legal regulations on that road is 30 km/h, traveling at the vehicle speed based on the vehicle control information violates the law. Therefore, the control information detecting unit 24 corrects the vehicle speed of the vehicle control information to 30 km/h.

Here, in the case where the subject to be compared at step 304 is not the legal regulation information but the road traffic status that is dynamically changing, for example, if the road traffic status at the point in question shows an average traveling speed of 20 km/h, the vehicle control information to be provided is corrected to 20 km/h at step 305 in accordance with the road status even if the law provides for the speed limit of 30 km/h.

Next, it is determined whether the vehicle control information corresponding to the provision zone still exists or not (step 306). If the vehicle control information still exists (Y at step 306), the processing returns to step 302 to continue search for the corresponding vehicle control information.

If no vehicle control information corresponding to the provision exists and the detection of the vehicle control information is complete (N at step 306), the search ends.

Then, the center device 20 transmits the position information and the vehicle control information corresponding to the position information to the terminal device 10 from the transmitting/receiving unit 21 (step 307).

In the terminal device 10, the transmitting/receiving unit 14 receives the position information and the vehicle control information corresponding to the position information sent from the center device 20 (step 308), and the storage unit 15 stores these.

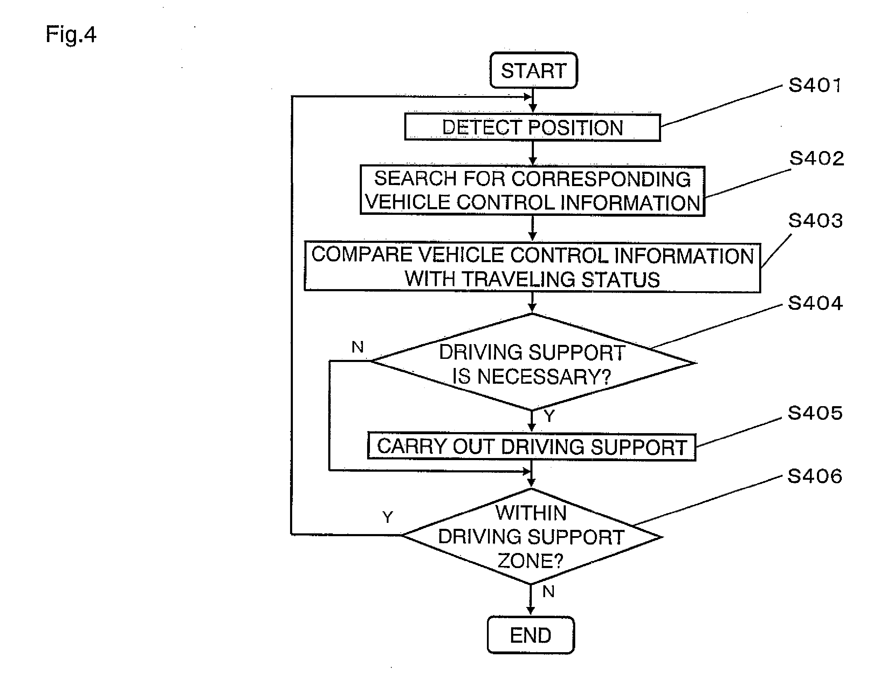

Next, a procedure in which the terminal device 10 performs driving support using the vehicle control information acquired from the center device 20 will be described with reference to Fig. 4.

First, as the storage unit 15 of the terminal device 10 stores the position information and the vehicle control information corresponding to the position information, driving support is started under the control of the control unit 18. The control unit 18 causes the position detecting unit 11 to detect the present position (step 401), then searches the storage unit 15 for the vehicle control information corresponding to that position (step 402), compares the vehicle control information, thus found by the search, with the traveling status including the speed of the vehicle, the opening of the accelerator, the operating status of the brake, the operating status of the steering wheel and the like detected by the vehicle information detecting unit 12 (step 403), and determines whether driving support is necessary (step 404).

If, as a result, driving support is necessary (Y at step 404), the control unit 18 decides a driving support method based on the vehicle control information found by the search, and the vehicle control unit 17 carries out driving support by controlling the accelerator, brake or the like (step 405).

For example if the present speed of the vehicle is 35 km/h and the vehicle speed of the vehicle control information is 30 km/h, and if it is judged that the speed of the vehicle can be lowered to 30 km/h by reducing the opening of the accelerator by the vehicle control unit 17, the vehicle control unit 17 performs control to reduce the opening of the accelerator.

In consideration of the vehicle control information ahead of the present position in the traveling direction, if the vehicle control information ahead of the present position shows increase in the speed, the vehicle control unit 17 performs no control. On the other hand, if the vehicle control information ahead of the present position shows deceleration from the speed of the present vehicle control information, the control unit 18 controls the vehicle control unit 17 so that the vehicle control unit 17 carries out deceleration by using the brake.

Even in the case where the vehicle control unit 17 carries out deceleration by using the brake, when the steering wheel is being operated largely and braking may cause danger to the vehicle operation, the control unit 18 controls the vehicle control unit 17 so that the deceleration or acceleration operation by the vehicle control unit 17 is sustained until the operation of the steering wheel ends. Thus, safe driving support can be realized.

Next, it is judged whether the present position is within the driving support zone or not (step 406). If it is within the driving support zone (Y at step 406), driving support is continued (step 401) . If it is out of the driving support zone (N at step 406), driving support is ended.

If driving support needs to be continued, the processing starting at step 301 in Fig. 3 is performed again to continue driving support.

If it is determined at step 404 that driving support is not necessary (N at step 404), it is directly judged whether the present position is within the driving support zone or not (step 406).

In this manner, according to this embodiment, as the operator inputs a destination and performs a predetermined operation at the terminal device 10, the terminal device 10 can acquire the vehicle control information corresponding to the type of the vehicle with respect to all the routes from the place of departure to the destination. Therefore, on the basis of the present position detected by the position detecting unit 11, the terminal device 10 detects the vehicle control information with respect to the present position and can automatically control the vehicle.

Fig. 5 is a diagram for explaining an operation of the driving support system according to this embodiment, as described above.

Fig. 5 shows the following information, for example.

As the center device 20 statistically has processed many pieces of vehicle information sent from the terminal devices 10 carried on many vehicles, respectively, the vehicle speed for a vehicle of vehicle type of sedan is 35 km/h at the position of position coordinates (yyyyyyyyy north latitude, xxxxxxxxx east longitude) on the road of road number 1, and the vehicle is traveling with the brake control of "low intensity". On the other hand, in consideration of the legal regulations with respect to this position, a vehicle of sedan is controlled by adjusting the opening of the accelerator to the vehicle speed of 30 km/h.

As an exemplary technique of storing such vehicle control information by the storage unit 22, the following technique is provided. First, the storage unit 22 stores position information indicating a vehicle control point with respect to road number allocated to each section and direction of the road. Then, the storage unit 22 stores vehicle control information standardized for each type of vehicle such as subcompact car, sedan, sports car or the like, with respect to each position coordinate.

The contents of the vehicle control information stored here include the speed of the vehicle, the opening of the accelerator, the operation of the brake, the operation of the steering wheel and the like. However, even at a point where the vehicle speed is high, if the brake is frequently operated or the steering wheel is frequently operated, the control unit 18 prepares the vehicle control information to be stored by making an adjustment to reduce the vehicle speed.

When the center device 20 transmits vehicle control information to the terminal device 10, the vehicle control information for each position information is compared with the legal regulation information such as speed limit corresponding to the position information, and the vehicle control information is corrected in accordance with the legal regulations, as described with reference to Fig. 3.

The contents of the legal regulation information include regulations on the vehicle height limit, vehicle width limit, weight limit, traveling vehicle type and the like with respect to a tunnel, bridge, or road width, in addition to the speed limit. For example, if the vehicle control information is over the speed limit, the vehicle control information is corrected to adjust the opening of the accelerator or control the brake in order to lower the vehicle traveling speed. At a point where the vehicle width limit is strict, the vehicle control information is corrected to lower the vehicle speed or prevent the vehicle from traveling.

It is also possible to correct the vehicle control information in accordance with the traffic flow, as described with reference to Fig. 3, on the basis of the road traffic status provided by the existing road traffic information provision service, instead of the legal regulation information.

Here, the contents of the road traffic information include the average traveling speed and regulation information provided from the traffic status. If the average traveling speed provided from the traffic status is lower than the vehicle speed of the vehicle control information, the center device 20 can correct the vehicle control information.

Also, in the terminal device 10, when the position of the vehicle carrying this terminal device coincides with the position coordinates stored in the storage unit 15, and if the vehicle control information includes control of a vehicle coincident with the vehicle type of the vehicle carrying this terminal device, for example, control to perform a brake operation when the position coordinates in question and the type of vehicle in question are coincident with each other, the control unit 18 can control the vehicle control unit 17 so that the vehicle control unit 17 can lower the vehicle speed in advance by reducing the opening of the accelerator or the like and thus can prevent an erroneous operation at the time of operating the brake.

In this manner, in this embodiment, as the terminal device 10 receives the provision of the standardized vehicle control information from the center device 20, vehicle control in consideration of the type of vehicle can be carried out safely and securely.

For example, it is considered that the speed of large vehicles such as trucks and buses tends to increase near an intersection at an intermediate point on a downward slope and that the rate of use of the brake near the intersection becomes higher. However, it is considered that the speed of light vehicles such as subcompact cars does not tend to increase and that the rate of use of the brake is lower.

In the case where the number of large vehicles traveling through such an intersection is small and the number of subcompact cars traveling through the intersection is large, if statistical processing of the gathered vehicle control information for all the passing vehicles is performed, the contents of the control vehicle information is biased for subcompact cars. As a result, it is considered that the vehicle control information to increase the rate of use of the brake cannot be provided to large vehicles, and that large vehicles cannot sufficiently reduce the vehicle speed near the intersection in question.

However, by performing statistical processing of the vehicle control information separately for each type of vehicle, as shown in Fig. 5, the vehicle control information to increase the rate of use of the brake can be provided more securely to large vehicles, and large vehicles can reduce the vehicle speed.

Specifically, in the case where the present vehicle speed is 35 km/h and the vehicle speed of the vehicle control information is 30 km/h, if it is judged that the vehicle speed can be lowered to 30 km/h by reducing the opening of the accelerator, the vehicle control unit 17 performs control to reduce the opening of the accelerator.

Also, in consideration of the vehicle control information ahead of the present position in the traveling direction, if the vehicle control information ahead of the present position shows increase in the speed, the vehicle control unit 17 performs no control. On the other hand, if the vehicle control information ahead of the present position shows deceleration from the speed of the present vehicle control information, the control unit 18 controls the vehicle control unit 17 so that the vehicle control unit 17 carries out deceleration by the brake.

Also, even when the vehicle control unit 17 carries out deceleration by the brake, if the steering wheel is being operated largely and braking may cause danger to the vehicle operation, the control unit 18 controls the vehicle control unit 17 so that the deceleration operation or acceleration operation by the vehicle control unit 17 is sustained until the operation of the steering wheel ends. Thus, it is possible to enhance safety.

Here, in the case where the terminal device 10 performs driving support, in order to eliminate the driver's psychological anxieties by driving support, it is effective to provide a construction to notify the driver in advance by using a notification unit that performs voice notification, screen display or the like.

Moreover, for the vehicle control information with respect to vehicles which tend to run faster, since such vehicles may violate the legal regulations, considering the legal regulation information makes it possible to provide the vehicle control information conforming to the legal regulations, and at the same time, to improve safety of the vehicle traveling.

Also, since all the vehicle control information with respect to the planned traveling routes from the places of departure to the destinations is stored in advance in the storage unit 15 of the terminal device 10, the terminal device 10 can prepare for the vehicle control before reaching the point where the vehicle control is to be carried out, and can carry out smoother, safer and continuous vehicle control.

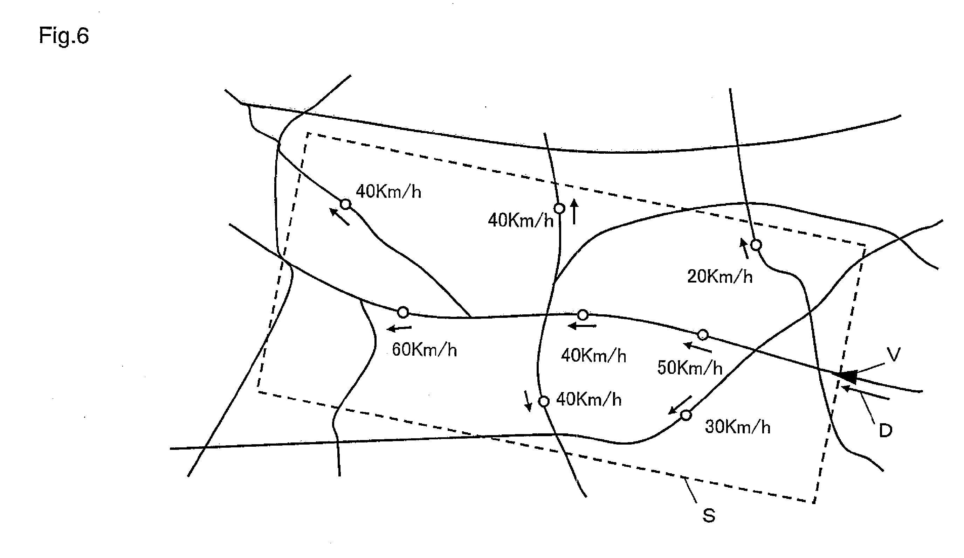

Fig. 6, Fig. 7 and Fig. 8 are conceptional views showing different techniques in the case of searching for vehicle control information with respect to each route.

Fig. 6 shows a case where, in the center device 20, the control information detecting unit 24 searches for vehicle control information within a rectangular designated area S indicated by a dotted line, corresponding to the traveling direction D of a vehicle V (present position).

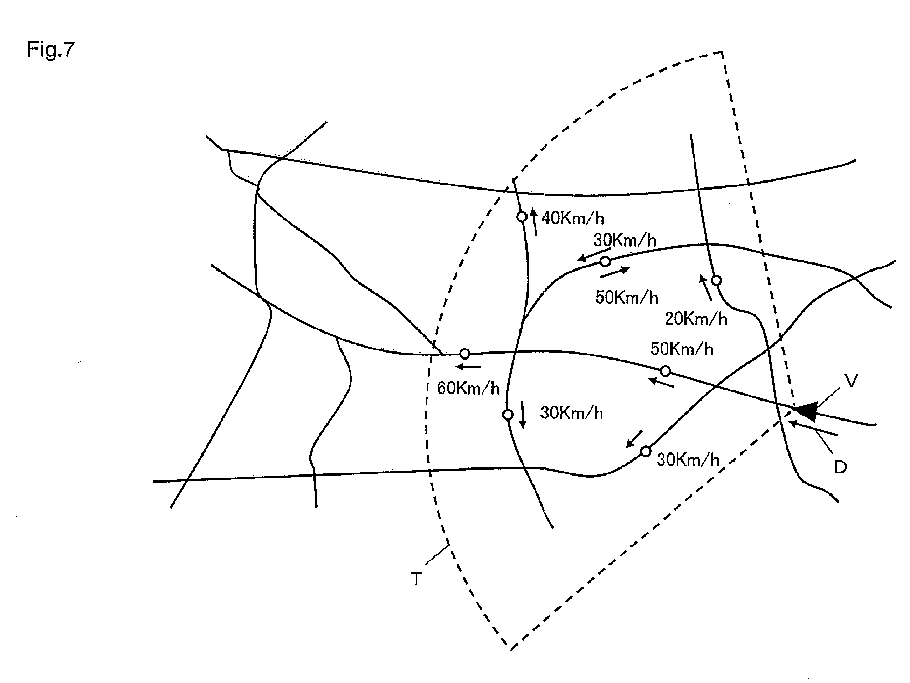

Fig. 7 shows a case where the control information detecting unit 24 similarly searches for the corresponding vehicle control information within a sector-like designated area T indicated by a dotted line.

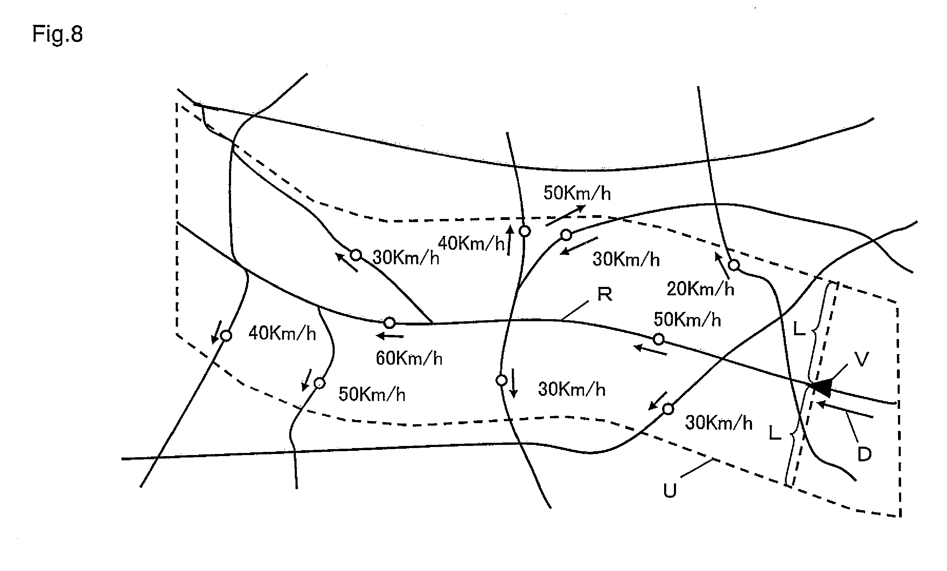

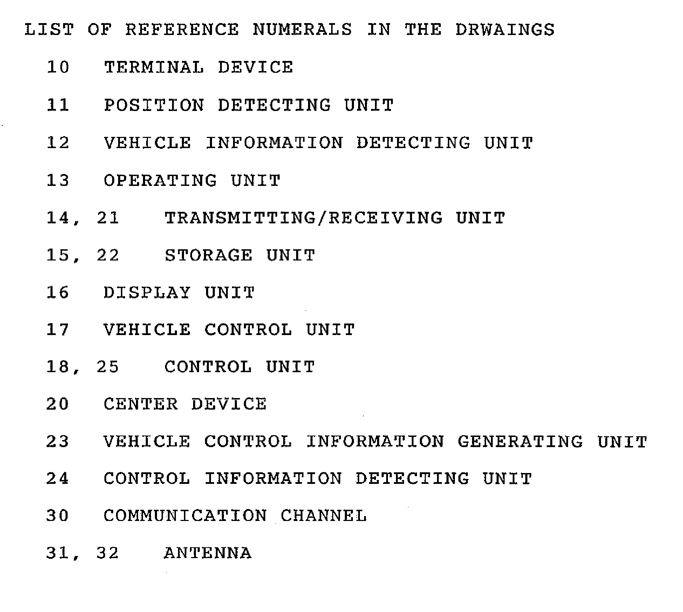

Fig. 8 shows a case where vehicle control information within a designated area U indicated by a dotted line, which is a range extending left and right each by a predetermined distance L from the traveling direction D of the vehicle in a preset traveling direction, for example, a traveling direction R from a place of departure to a destination, is searched for.

In Fig. 8, if the predetermined distance L to the left and right is 0, it means that only the vehicle control information corresponding to the traveling route R from the place of departure to the destination is searched for.

The arrows and speed information in each of these drawings indicate the speed information acquired from the vehicle control information with respect to that direction (up or down) of each road.

As the terminal device 10 thus acquires in advance the vehicle control information within a designated area from the center device 20, even if a vehicle within this area slightly changes the traveling direction, the terminal device 10 can immediately control the vehicle in accordance with the change by effectively utilizing the vehicle control information with respect to the traveling direction.

Also, in this case, in the terminal device 10, the operator may designate in advance the designated area in which vehicle control information should be acquired, by using the operating unit 13, then transmit an acquisition request for the vehicle control information to the center device 20, and thus acquire only the vehicle control information of the designated area.

In this embodiment, the terminal device 10 not only can directly control a vehicle in accordance with vehicle control information but also can display vehicle control information by using the display unit 16.

That is, in the state where the terminal device 10 has received vehicle control information from the center device 20 and the storage unit 15 has stored the vehicle control information, when the operator inputs in the terminal device 10 a command to the effect that the operator wants to display the vehicle control information by using the operating unit 13, the control unit 18 performs in accordance with the command so that the vehicle control information with respect to the traveling direction of the present position detected by the position detecting unit 11 is displayed by the display unit 16, as shown in Fig. 6 and Fig. 8.

In this manner, according to this embodiment, as a command to the effect that the operator wants to display the vehicle control information is inputted by using the operating unit 13, the vehicle control information with respect to the traveling direction of the present position is arbitrarily displayed by the display unit 16, and the operator himself/herself can know in advance what control will be performed, while watching the display.

In this case, it is a matter of course that the control unit 18 may output and present the vehicle control information by voice, using a voice synthesizing device, instead of the display by the display unit 16.

Also, in the above-described embodiment, the vehicle control information generating unit 23 calculates the vehicle control information that is statistically formed or standardized by averaging the vehicle information or the like. However, this invention is not limited to such a simple average. The vehicle control information may be calculated by taking a weighted average about parts with a large number of data may be calculated, or by using any other desired technique.

In this embodiment, the description is made with respect to faur-wheeled vehicles but it may also apply to two-wheeled vehicles. In the case of two-wheeled vehicles, the terminal device 10 can be incorporated in the lower part of the seat or saddle.

Moreover, in this embodiment, the types of vehicle as shown in Fig. 5 are described but this invention is not limited to these. As the vehicle information and the vehicle control information are distinguished by the type of fuel such as diesel or gasoline, the type of displacement, the number of driving wheels, the position of driving wheels and the like, more elaborate driving support in consideration of dynamic changes in various legal regulations and routes can be carried out.

### Industrial Applicability

As described above, according to this invention, the center device generates vehicle control information statistically formed for each type of vehicle and transmits the information to the terminal device without using any particular road-side device. The terminal device can control the vehicle on the basis of the vehicle control information and can freely support safer driving of each vehicle not only on an expressway but also on a general road. Therefore, this invention is useful for a driving support system or the like that performs driving support of vehicles.

## Claims

1. A center device **characterized by** having: a receiving unit that receives vehicle information including type and speed of a vehicle and position information about present position of the vehicle, sent from a terminal device carried on the vehicle; a vehicle control information generating unit that generates vehicle control information for controlling vehicles statistically formed for each type of vehicle on the basis of the vehicle information and the position information received by the receiving unit; a storage unit that stores the vehicle control information generated by the vehicle control information generating unit; a control information detecting unit that searches the storage unit for vehicle control information corresponding to the position information of the vehicle received from the terminal device; and a transmitting unit that transmits the vehicle control information found as a result of the search by the control information detecting unit to the terminal device.

2. The center device as claimed in claim 1 , **characterized in that** the vehicle control information generating unit calculates the vehicle control information on the basis of averaged information formed by averaging the vehicle information, and that the storage unit stores the vehicle control information in association with the position information for which the vehicle information is sent.

3. The center device as claimed in claim 1, **characterized in that** the control information detecting unit searches for legal regulation information with respect to the position information corresponding to the vehicle control information that is found as a result of the search, and corrects the vehicle control information for each the position information on the basis of the result of comparison between the vehicle control information and the legal regulation information.

4. The center device as claimed in claim 1, **characterized in that** the control information detecting unit searches for traffic information related to traffic status with respect to the position information corresponding to the vehicle control information that is found by search, and corrects the vehicle control information for each of the position information on the basis of the result of comparison between the vehicle control information and the traffic information.

5. The center device as claimed in claim 1, **characterized in that** the control information detecting unit searches for vehicle control information within a predetermined zone from the present position of the vehicle in response to a request from the terminal device.

6. The center device as claimed in claim 5, **characterized in that** the predetermined zone is a sector-like zone directed toward the traveling direction from the present position.

7. The center device as claimed in claim 5, **characterized in that** the predetermined zone is a rectangular zone directed toward the traveling direction from the present position.

8. The center device as claimed in claim 5, **characterized in that** the predetermined zone is a zone of the traveling route of the vehicle received from the terminal device.

9. The center device as claimed in claim 5, **characterized in that** the predetermined zone is a zone with a predetermined width centering on the traveling route of the vehicle received from the terminal device.

10. The center device as claimed in claim 1, **characterized in that** the vehicle control information controls at least one of the accelerator and the brake of the vehicle.

11. A terminal device that is carried on a vehicle and that acquires vehicle control information for controlling the vehicle, sent from a center device, and controls the vehicle, the terminal device being **characterized by** having: a position detecting unit that detects position information related to the present position of the vehicle; a vehicle information detecting unit that detects vehicle information including type and speed of the vehicle; a transmitting unit that transmits the position information detected by the position detecting unit and the vehicle information detected by the vehicle information detecting unit to the center device; a receiving unit that receives the vehicle control information sent from the center device; and a vehicle control unit that controls the vehicle on the basis of the vehicle control information received by the receiving unit.

12. The terminal device as claimed in claim 11, **characterized in that** the vehicle control information corresponds to the position information detected by the position detecting unit.

13. The terminal device as claimed in claim 11, **characterized in that** the vehicle control information is statistically formed for each type of vehicle on the basis of the vehicle information and the position information sent by the transmitting unit.

14. The terminal device as claimed in claim 11, **characterized in that** the terminal device has a storage unit that stores the vehicle control information received by the receiving unit and that the vehicle control unit extracts the vehicle control information from the storage unit on the basis of the position information of the vehicle.

15. The terminal device as claimed in claim 14, **characterized in that** the transmitting unit transmits an acquisition request for vehicle control information in a rectangular or sector-like zone directed toward the traveling direction from the present position of the vehicle, to the center device, and that the receiving unit receives the vehicle control information in the rectangular zone or the sector-like zone based on the acquisition request, from the center device.

16. The terminal device as claimed in claim 14, **characterized in that** the transmitting unit transmits an acquisition request for vehicle control information on a traveling route of the vehicle, to the center device, and that the receiving unit receives the vehicle control information on the traveling route based on the acquisition request, from the center device.

17. The terminal device as claimed in claim 14, **characterized in that** the transmitting unit transmits an acquisition request for vehicle control information in a predetermined zone centering on the traveling route of the vehicle, to the center device, and that the receiving unit receives the vehicle control information based on the acquisition request, from the center device.

18. The terminal device as claimed in claim 11, **characterized in that** the vehicle control unit controls at least one of the accelerator and the brake of the vehicle.

19. A driving support system **characterized by** transmitting vehicle control information for controlling a vehicle to a terminal device carried on the vehicle from a center device, wherein the terminal device has: a position detecting unit that detects position information related to the present position of the vehicle; a vehicle information detecting unit that detects vehicle information including type and speed of the vehicle; a terminal-side transmitting unit that transmits the position information detected by the position detecting unit and the vehicle information detected by the vehicle information detecting unit to the center device; a terminal-side receiving unit that receives the vehicle control information sent from the center device; and a vehicle control unit that controls the vehicle on the basis of the vehicle control information received by the terminal-side receiving unit, and wherein the center device has: a center-side receiving unit that receives the vehicle information and the position information; a vehicle control information generating unit that generates vehicle control information statistically formed for each type of vehicle on the basis of the vehicle information and the position information received by the center-side receiving unit; a storage unit that stores the vehicle control information generated by the vehicle control information generating unit; a control information detecting unit that searches the storage unit for vehicle control information corresponding to the position information of the vehicle received from the terminal device; and a center-side transmitting unit that transmits the vehicle control information detected by the control information detecting unit to the terminal device.
